# EUROPEAN PATENT APPLICATION

(11) **EP 2 809 057 A1**
(43) Date of publication of application: **03.12.2014**
(21) Application number: 14170106.0
(22) Date of filing: 27.05.2014
(51) Int. Cl.: H04M 3/51, H04W 4/22, H04W 76/00

(54) **Method and apparatus to allow a PSAP to derive useful information from accelerometer data transmitted by a caller's device**

(30) Priority: 30.05.2013 US 201313905942
(71) Applicant: Avaya Inc., New Jersey 07920 (US)
(72) Inventor: Michaelis, Paul Roller, Louisville, CO 80027 (US); Bentley, Jon, New Providence, NJ 07974 (US); Fletcher, Mark, Ringwood, NJ 07456 (US)
(74) Representative: Williams, David John

(57) **Abstract**

A Public Safety Answering Point (PSAP) is configured to receive a description of detected movement associated with one or more inertial sensors of a communication device. The description of the detected movement may then be analyzed to determine a likelihood of injury associated with the movement, whether or not the user associated with the communication device is experiencing abnormal neuromuscular activity, and/or whether the user is outside a range of the communication device such that the user is unlikely to hear audio information originating from the communication device. The PSAP may additionally or alternatively utilize the description of the movement information to assist and/or provide an advisory recommendation in the decision of which, if any first responder resources should be dispatched; the recommendation may include which resources and at what priority the resources should be dispatched.

## Description

### FIELD OF THE DISCLOSURE

An exemplary embodiment is generally directed toward receiving and deriving useful information from accelerometer data within a Public Safety Answering Point (PSAP) or E911 contact center.

### BACKGROUND

Contact centers are often used to direct customer calls to various contact center resources (e.g., agents) based on a determination of the customer's question(s), the customer's needs, the availability of agents, the skills of agents, and so on. One specific type of contact center is known as a Public Safety Answering Point (PSAP) or E911 contact center; the PSAPs or E911 generally answer calls made to 911.

PSAPs experience many unique problems not often encountered in a traditional contact center, usually because each contact in a PSAP is associated with an emergency. One problem that is more commonly experienced by PSAPs as compared to traditional contact centers relates to dispatching resources in cases of emergencies; specific resources, such as Advanced Life Support or Basic Life Support, are often dispatched to an emergency based on the information provided by a patient or other caller - such as a witness and/or bystander. In cases where the patient, or caller, is properly alert and oriented and can tell the dispatcher accurate details of the emergency or event, what they need, or what the problem is, the decision by the call-taker or dispatcher is relatively straightforward. In cases when a sick or injured patient is unable or unwilling to communicate, or the patient is struggling in some way, the call-taker or dispatcher often does not have enough factual data about the patient, the event, and/or the mechanism of injuring; thus, it is often unclear if they would be better served with an ALS or BLS unit.

In such situations, how can a PSAP call-taker or dispatcher quickly learn important factual details pertaining to the emergency? That is, how can he or she best determine whether a patient would be better served with an Advanced Life Support (ALS) or a Basic Life Support (BLS) unit? Many times, the PSAP call-taker is not provided with additional information about the emergency; in many cases, the PSAP call-taker may make a subjective decision based on what they hear or that which is communicated to them by the patient, or caller, to determine an appropriate response level to an emergency.

### SUMMARY

It is with respect to the above issues and other problems that the embodiments presented herein were contemplated. This disclosure proposes, among other things, providing accurate and factual data from an accelerometer regarding movement, non-movement, and positional coordinates of a mobile device, such as a telephone, relative to a body of the caller, such that the dispatcher can augment their subjective decision. Additionally, this disclosure allows a call-taker and/or dispatcher to invoke a device movement analysis module at their work station and, during their interaction with a patient, and/or caller, determine and analyze movement of a body of the caller; such a system would at least assist with for example, the identification of seizures (including duration, severity, and count), the identification of abnormal neuromuscular activity, the Mechanism of Injury (MoI) for automobile accidents and other falls and trauma that may involve cervical spine or head injuries, length of time calculations for how long someone has been still (e.g. a "Man down" situation), trauma, convulsions, and potential automatic call-out for pre-defined movement types. A pop-up window containing specific analysis and potentially an automated system of dispatch may be provided. Further, this disclosure also leverages the ability of an accelerometer to determine whether a communication device, or telephone, is positioned in an orientation suggesting the caller will or will not be able to hear communication device. Cartesian coordinates may be used to indicate relative positional changes of the caller, suggesting the ability/inability of the caller to hear and respond to queries from the call-taker and/or dispatcher.

The facilities that handle 9-1-1 calls are referred to as Public Safety Access Points (PSAPs) which record all call traffic. In some embodiments, an automatic motion analysis and display is provide to aid call-takers and dispatchers in determining the appropriate level or response to a 9-1-1 emergency call and gives first responders and hospitals early vitals to best support the person with the emergency. In general, there are two kinds of pre-hospital care providers, Emergency Medical Technicians (EMTs) and Paramedics. An ambulance staffed by two EMTs is considered a Basic Life Support (BLS) unit. Paramedics generally have more training than EMTs. An ambulance staffed by two paramedics (or two licensed mobile intensive care registered nurses) or, in some jurisdictions, one Paramedic and one EMT, is considered to be an Advanced Life Support (ALS) unit. Some jurisdictions use only ALS units while others have a mixture of BLS and ALS units. The BLS/ALS decision is usually made by a dispatcher at the PSAP by consulting tools such as Dispatch Guidecards. An example Dispatch Guidecard can be found on the World Wide Web at state.nj.us/health/ems/documents/guidecard.pdf, which is hereby incorporated by reference for all that it teaches and for all purposes. Moreover, it may be difficult for a call-taker or dispatcher to determine whether a patient would be better served with an ALS or a BLS unit from what he or she hears.

Many cell phones today have a built-in accelerometer and/or other inertial sensors, such as a gyro and magnomemeter. In the future, accelerometers will likely become ubiquitous in cell phones and in Bluetooth® ear pieces. In general, some embodiments of this disclosure analyze data collected by mobile devices to assist PSAP call-takers, dispatchers, and other first responders and healthcare workers. There are at least three important applications of such analyses. The motion analysis of a patient would be used to determine a need to upgrade from BLS to ALS. This may be presented as a pop-up or delivery of data to the call-taker's/dispatcher's/hospital's display. One or more pieces of this information may be sent to the BLS or ALS team, as well as to the hospital where the patient will be transported or to a doctor on call.

Further yet, some embodiments of the present disclosure may identify abnormal neuromuscular activity. In New Jersey, for instance, general illness is dispatched as BLS, while almost all seizures are ALS (the exception may be "Single seizure with history of seizure disorder"). A straightforward analyses of data from a Bluetooth® headset on a patient's ear or a cell phone in a patient's shirt pocket may reveal an accurate picture of the duration, severity, and count of a seizure (a Bluetooth® device would have to be on the patient's person). This information may be critical in making the dispatch decision, useful to clinicians in the field, and later at the hospital. Patients with pre-existing conditions (such as Parkinsonism) might display symptoms that could be misconstrued as seizures, so a strategy must be in place to handle that. In some cases, like a patient with Parkinsonism, the device could measure the increase in abnormal neuromuscular activity from one or more baseline factors and/or compare the abnormal neuromuscular activity to one or more baseline factors. The creation of some baseline parameters and possibly some templates may be required.

Some embodiments of the present disclosure may identify a High Index of Suspicion for Cervical-Spine Injuries. The system of the human head on top of the cervical spine (that is, the neck) has been likened to "a bowling ball on a broom stick." In a number of accidents, particularly falls and motor vehicle collisions (MVCs), EMTs in the field depend on the patient's statement and their reconstruction of the Mechanism of Injury (MoI) to determine whether the patient needs to be "collared and boarded," which is an uncomfortable, dangerous, and expensive procedure. Data from a Bluetooth® or cell phone accelerometer may help to triage falls into three categories: Green (no dangerous motion observed), Red (absolutely essential to board and collar), and Yellow (slight danger exists - the EMT must use his or her own judgment). This information is not relevant to BLS/ALS dispatch, but may be very useful at a scene and perhaps even in a hospital.

Some embodiments of the present disclosure may identify the Length of Time for a "Man Down." One of the scariest possible dispatches is for an unresponsive patient, by convention, this is referred to as a "Man Down." A very useful piece of information is how long the patient has not been moving; this information may be retrieved from an accelerometer of a mobile device. In addition to a full "Man Down," information about mobility may also be useful in seizures, strokes, and the like. As one non-limiting example, if the original 9-1-1 call is made by a bystander (say, for a patient he observes seizing), it would be useful for that person to take the patient's phone, call 9-1-1, and transmit accelerometer information from a different phone in the middle of the existing 9-1-1 call. Data may also be useful for additional types of calls, including trauma and convulsions.

In some embodiments of the present disclosure a proactive calling feature is disclosed. So far, the assumption has been that a human being initiates a 9-1-1 call. In the context of accelerometers, in some embodiments some of the calls to 9-1-1 could be initiated automatically. If this is automatic call initiation is performed, the destination may be to a provisioned service such as OnStar® or LifeAlert® (similar services for personal alerting devices). For instance, a user who is an unrestrained driver in an automobile accident may experience extreme acceleration as the user bounces around inside the passenger compartment. If the user is unresponsive after the accident, the mobile device associated with the accelerometer may initiate a call to a commercial emergency service provider (e.g., OnStar®).

In addition to using the accelerometer to measure clinical indicators, the accelerometer information may also be used to determine whether or not the communication device (telephone) is in a position where the caller can hear what the call-taker or dispatcher from the PSAP is saying. For example, when a caller is speaking, the system may determine by acoustic analysis that the communication device is being held against the caller's head and that the speakerphone (if available) is not being used. If this point, e.g. the point at which the communication device is held against the user's head, is regarded as geometric point 0,0,0 then the system may assume that the user can hear the communication device call (telephone call). During an emergency, an assumption could be made that the caller is no longer able to hear the PSAP call-taker if an analysis of the motion reveals Cartesian coordinates that differ considerably from 0,0,0 (an automatic reset to 0,0,0 would be triggered when acoustic analysis indicates the communication device is again being held against the caller's head). Providing this information, e.g., knowing that the communication device is not being held against the caller's ear, may be a useful piece of information for the PSAP (e.g., the call-taker may assume that what he or she is saying is not being heard by the caller). That is, if the communication device (telephone) is in a position that is likely not able to be heard, and there is no response to a verbal query, the call-taker and/or dispatcher may reasonably assume that the request was not heard.

In one embodiment, a method is provided, the method comprising: receiving, at a communication server of a Public Safety Answering Point (PSAP), inertial sensor data from one or more inertial sensors associated with a communication device, providing the inertial sensor data to a movement analysis module, analyzing, using at least the movement analysis module, the inertial sensor data to obtain movement information for the communication device, based on the obtained movement information, determining one or more of: (i) a movement of a communication device with respect to an origin point of the communication device; (ii) a mechanism of injury experienced by the user and an injury associated with the mechanism of injury; and (iii) whether the movement information corresponds to abnormal neuromuscular activity experienced by a user; and providing the movement information and the determination at least to a computer associated with the PSAP. In yet a further embodiment, a non-transitory computer readable information storage medium having stored thereon instructions that cause a computing system to execute a method is provided, the method comprising: receiving, at a communication server of a Public Safety Answering Point (PSAP), inertial sensor data from one or more inertial sensors associated with a communication device at a communication, providing the inertial sensor data to a movement analysis module; analyzing, with the movement analysis module, the inertial sensor data to obtain movement information for the communication device, based on the obtained movement information, determining one or more of: (i) a movement of a communication device with respect to an origin of the communication device; (ii) a mechanism of injury experienced by the user and an injury associated with the mechanism of injury; and (iii) whether the movement information corresponds to abnormal neuromuscular activity experienced by a user; and providing the movement information and the determination at least to a computer associated with the PSAP.

In yet a further embodiment, a system that assists in a decision-making process at a Public Safety Answering Point (PSAP) to dispatch resources based on movement information associated with a communication device of a user is provided, the system comprising: a communication server including a movement analysis module configured to receive inertial sensor data from an inertial sensor associated with the communication device, analyze the inertial sensor data to obtain movement information for the communication device, determine one or more of: (i) a movement of a communication device relative to an origin point of the communication device; (ii) a mechanism of injury experienced by the user and an injury associated with the mechanism of injury; and (iii) whether the movement information corresponds to abnormal neuromuscular activity experienced by the user; and provide the movement information and the determination at least to a computer associated with the PSAP.

In another embodiment, a communication device is provided, the communication device comprising: a communication interface, a processor configured to execute programming instructions stored in memory, memory comprising instructions that are executable by the processor, the instructions including: a movement analysis module configured to receive inertial sensor data from an inertial sensor associated with the communication device, analyze the inertial sensor data to determine movement information for the communication device, and based on the movement information, determine one or more of (i) a movement of a communication device with respect to an origin point of the communication device; (ii) a mechanism of injury experienced by the user and an injury associated with the mechanism of injury; and (iii) whether the movement information corresponds to abnormal neuromuscular activity experienced by a user.

In another embodiment, a system that assists in a decision-making process at a Public Safety Answering Point (PSAP) to dispatch resources is provided, the system comprising: a communication device comprising, a communication interface, a processor configured to execute programming instructions stored in memory, memory comprising instructions that are executable by the processor, the instructions including: a movement analysis module configured to receive inertial sensor data from an inertial sensor associated with the communication device and transmit the inertial sensor data to the communication server; the communication server comprising: a communication interface, a processor configured to execute programming instructions stored in memory, memory comprising instructions that are executable by the processor, the instructions including: a movement analysis module configured to receive inertial sensor data from the communication device, analyze the inertial sensor data to determine movement information for the communication device, and based on the movement information, determine one or more of (i) a movement of a communication device with respect to an origin point of the communication device; (ii) a mechanism of injury experienced by the user and an injury associated with the mechanism of injury; and (iii) whether the movement information corresponds to abnormal neuromuscular activity experienced by a user; and provide the movement information and the determination to a workstation.

The term "caller" as used herein can be construed to include a person or patient that has contacted, or been contacted by, a PSAP. In general, any form of communication medium may be utilized; such as, but not limited to a voice call, a video call, a web call, a chat, a VOIP communication, any known or later developed communications, or combinations thereof. Additionally, a caller may include one or more of a patient in distress, a witness to an emergency, a bystander, emergency responders already on the scene, or combinations thereof. Moreover, while embodiments of the present disclosure will describe a caller as being a person reporting an emergency to a PSAP, it should be appreciate that embodiments of the present disclosure are not so limited and movement detection systems and methods described herein can be utilized in non-emergency contact centers, enterprise contact centers, and the like.

The term "agent" or "PSAP agent" can be construed to include one or more human agents operating one or more contact center endpoints or workstations. In some embodiments, an agent may correspond to a contact center supervisor, a trainee, or an agent. An agent may process or respond to caller with or without the assistance of an automated processing resource. For instance, an automated system may be configured to generate proposed responses or additional questions based upon clinical signs that have been detected and analyzed. An agent may be allowed to select which among the automatically-generated responses are the best responses and/or edit one of the automatically-generated responses. Accordingly, it may be possible that an agent is considered to be "processing" a work item when, in fact, an automated resource is being used to assist the agent in the processing of the work item.

The phrases "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising", "including", and "having" can be used interchangeably.

The term "automatic" and variations thereof, as used herein, refers to any process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material".

The term "computer-readable medium" as used herein refers to any tangible storage that participates in providing instructions to a processor for execution. Such a medium may take many forms, including but not limited to, non-volatile media, volatile media, and transmission media. Non-volatile media includes, for example, NVRAM, or magnetic or optical disks. Volatile media includes dynamic memory, such as main memory. Common forms of computer-readable media include, for example, a floppy disk, a flexible disk, hard disk, magnetic tape, or any other magnetic medium, magneto-optical medium, a CD-ROM, any other optical medium, punch cards, paper tape, any other physical medium with patterns of holes, a RAM, a PROM, and EPROM, a FLASH-EPROM, a solid state medium like a memory card, any other memory chip or cartridge, or any other medium from which a computer can read. When the computer-readable media is configured as a database, it is to be understood that the database may be any type of database, such as relational, hierarchical, object-oriented, and/or the like. Accordingly, the disclosure is considered to include a tangible storage medium and prior art-recognized equivalents and successor media, in which the software implementations of the present disclosure are stored.

The terms "determine", "calculate", and "compute," and variations thereof, as used herein, are used interchangeably and include any type of methodology, process, mathematical operation or technique.

The term "module" as used herein refers to any known or later developed hardware, software, firmware, artificial intelligence, fuzzy logic, or combination of hardware and software that is capable of performing the functionality associated with that element. Also, while the disclosure is described in terms of exemplary embodiments, it should be appreciated that individual aspects of the disclosure can be separately claimed.

### BRIEF DESCRIPTION OF THE DRAWINGS

Exemplary embodiments of the present disclosure are described in conjunction with the appended figures where:
Figure 1 is a block diagram of a communication system in accordance with an exemplary embodiment of the present disclosure;
Figure 2 is a block diagram of a communication device in accordance with an exemplary embodiment of the present disclosure;
Figure 3 is a block diagram of a communication server in accordance with an exemplary embodiment of the present disclosure;
Figure 4 illustrates a representative configuration for detecting inertial data in accordance with an exemplary embodiment of the present disclosure;
Figure 5 illustrates a second representative configuration for detecting inertial data in accordance with an exemplary embodiment of the present disclosure;
Figure 6 illustrates a third representative configuration for detecting inertial data in accordance with an exemplary embodiment of the present disclosure;
Figure 7 depicts a data structure in accordance with an exemplary embodiment of the present disclosure;
Figure 8 depicts a PSAP graphical user interface in accordance with an exemplary embodiment of the present disclosure;
Figure 9 is a flow diagram depicting a method associated with a communication system in accordance with an exemplary embodiment of the present disclosure;
Figure 10 is a flow diagram depicting a second method associated with a communication system in accordance with an exemplary embodiment of the present disclosure;
Figure 11 is a flow diagram depicting a third method associated with a communication system in accordance with an exemplary embodiment of the present disclosure;
Fig. 12 is a flow diagram depicting a method for determining a position of a communication device in accordance with an exemplary embodiment of the present disclosure.

### DETAILED DESCRIPTION

The ensuing description provides embodiments only, and is not intended to limit the scope, applicability, or configuration of the claims. Rather, the ensuing description will provide those skilled in the art with an enabling description for implementing the embodiments. It being understood that various changes may be made in the function and arrangement of elements without departing from the spirit and scope of the appended claims.

Furthermore, while embodiments of the present disclosure will be described in connection with Public Safety Access Point (PSAP) examples, it should be appreciated that embodiments of the present disclosure are not so limited. In particular, embodiments of the present disclosure can be applied to any contact center construct and, in some embodiments, may also be utilized in non-contact center settings. For instance, any communication scenario involving or requiring receiving accelerometer data from a caller's device may utilize the embodiments described herein. The usage of PSAP examples is for illustrative purposes only and should not be construed as limiting the claims.

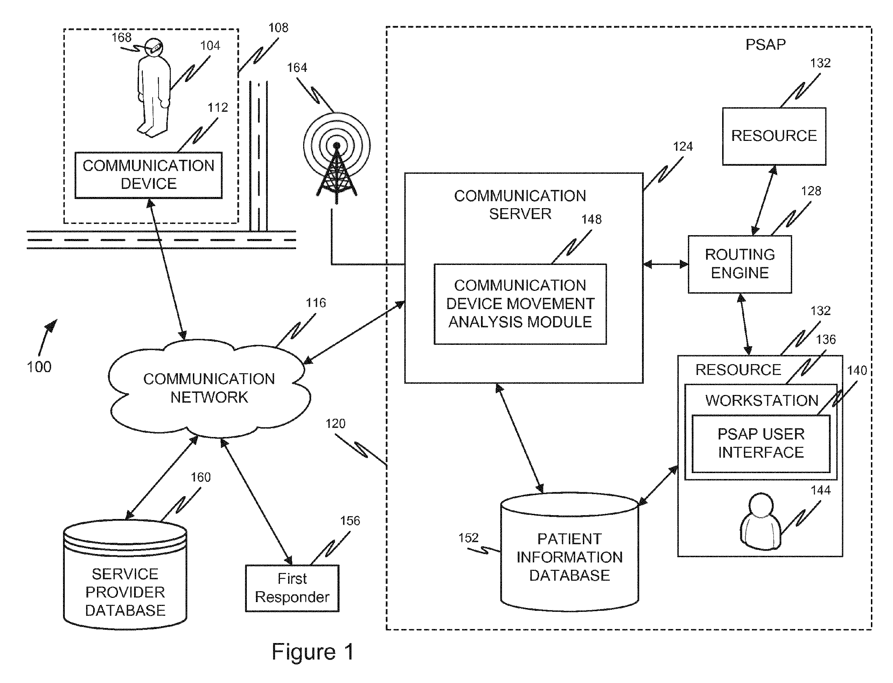

Fig. 1 shows an illustrative embodiment of a communication system 100 in accordance with at least some embodiments of the present disclosure. The communication system 100 may be a distributed system and, in some embodiments, comprises a communication network(s) 116 connecting one or more communication devices 112 to a contact center, such as a PSAP 120. In some embodiments the PSAP 120 includes a communication server 124, which may be owned and operated by an enterprise or government agency administering a PSAP in which a plurality of resources 132 are distributed to receive and respond to contacts, or calls, from communication devices 112. In some embodiments, the PSAP is responsible for answering contacts to an emergency telephone number, such as 9-1-1 (or, for example 1-1-2 in Europe), for police, firefighting, ambulance, and other emergency services. Trained telephone operators, such as agents 144, are usually responsible for dispatching these emergency services. Most PSAPs are now capable of determining caller location from landline calls, and many can handle mobile phone locations as well (sometimes referred to as phase II location), where the mobile phone company has a handset location system (such as a satellite positioning system). If a governmental entity operates its own PSAP, but not its own particular emergency service (for example, for a city-operated PSAP, there may be county fire but no city police), it may be necessary to relay the call to the PSAP that does handle that type of call. In some instances, if special services are required, for example Ice Rescue, Urban Search and Rescue, Search teams, HazMat Teams and the like, these services may be requested from other PSAPs and/or dispatch centers.

The communication network 116 may be packet-switched and/or circuit-switched. An illustrative communication network 116 includes, without limitation, a Wide Area Network (WAN), such as the Internet, a Local Area Network (LAN), a Personal Area Network (PAN), a Public Switched Telephone Network (PSTN), a Plain Old Telephone Service (POTS) network, a cellular communications network, an IP Multimedia Subsystem (IMS) network, a Voice over IP (VoIP) network, a SIP network, or combinations thereof. The Internet is an example of the communication network 116 that constitutes an Internet Protocol (IP) network including many computers, computing networks, and other communication devices located all over the world, which are connected through many telephone systems and other means. In one configuration, the communication network 116 is a public network supporting the TCP/IP suite of protocols. Communications supported by the communication network 116 include real-time, near-real-time, and non-real-time communications. For instance, the communication network 116 may support voice, video, text, web-conferencing, or any combination of media. Moreover, the communication network 116 may comprise a number of different communication media such as coaxial cable, copper cable/wire, fiber-optic cable, antennas for transmitting/receiving wireless messages, and combinations thereof. In addition, it can be appreciated that the communication network 116 need not be limited to any one network type, and instead may be comprised of a number of different networks and/or network types. For illustrative purposes, a person 104 who experiences an emergency, witnesses an emergency, or is simply a bystander, may use a communication device 112 to initiate contact with, or call into a PSAP 120 via the communication network 116. It should be appreciated that the communication network 116 may be distributed. Although embodiments of the present disclosure will refer to one communication network 116, it should be appreciated that the embodiments claimed herein are not so limited. For instance, multiple communication networks 116 may be joined by many servers and networks.

In accordance with at least some embodiments of the present disclosure, a communication device 112 may comprise any type of known communication equipment or collection of communication equipment. Examples of a suitable communication device 112, may include, but are not limited to, a personal computer or laptop with a telephony application, a cellular phone, a smartphone, a telephone, a tablet, or other device which can make or receive communications. In general, each communication device 112 may provide many capabilities to the caller 104 who has an emergency. These capabilities may include, but are not limited to, video, audio, text, applications, and/or data communications and the ability to access one or more agents 144 and/or resources 132 as well as other services provided by the PSAP 120. In one application, the communication device 112, as well as the processing resources 132, are video telephony devices (e.g., video phones, telepresence devices, a camera-equipped cellular or wireless phone, a mobile collaboration device, and a personal tablet, or laptop computer with a camera or web camera). Further, and as described below, each communication device 112 may be equipped with one or more inertial sensors 212 operable to measure at least accelerometer forces exerted on or experienced by the communication device 112. Moreover, the communication device 112 may further include or further be associated with one or more headsets, earpieces 168, ear buds, or the like that are in communication with or part of the communication device 112. The earpiece 168 may further comprise one or more inertial sensors 212. As one example, the earpiece 168 may utilize Bluetooth® to wirelessly transmit inertial sensor information to the communication device 112. The type of medium used by the communication device 112 to communicate with other communication devices 112 or processing resources 132 may depend upon the communication applications available on the communication device 112.

In accordance with some embodiments of the present disclosure, a caller 104 may utilize their communication device 112 to initiate a communication, or contact, with a PSAP, such as PSAP 120, to initiate communication with the communication server 124. The communication may be in the form of a message or collection of messages that are transmitted from the communication device 112, over the communication network 116, and received at the PSAP 120. For example, the communication may be transmitted as a telephone call, a packet or collection of packets (e.g., IP packets transmitted over an IP network), an email message, an instant message, an SMS message, a fax, a video chat, and combinations thereof. In some embodiments, the communication may not necessarily be directed at the communication server 124, but rather be on some other server in the communication network 116 where it is harvested by the communication server 124. An example of such a harvested communication includes a social media communication that is harvested by the communication server from a social media network or server. Exemplary architectures for harvesting social media communications are described in copending U.S. Application Nos. 12/784,369, 12/706,942, and 12/707,277, filed March 20, 2010, February 17, 2010, and February 17, 2010, respectively, each of which are hereby incorporated herein by reference in their entirety for all that they teach and for all purposes.

The communication may be received and maintained at the communication server 124, a switch or server connected to the communication server 124, or the like until a resource 132 is assigned to the communication at which point the communication server 124 passes the communication to a routing engine 128 to connect the communication device 112 which initiated the communication with the assigned or selected resource 132 Although the routing engine 128 is depicted as being separate from the communication server 124, the routing engine 128 may be incorporated into the communication server 124, or its functionality may be executed by the communication server 124.

In accordance with at least some embodiments of the present disclosure, the communication is directed toward a collection of processing resources 132 via the combined efforts of the communication server 124 and a routing engine 128. The resources 132 can either be completely automated resources (e.g., Interactive Voice Response (IVR) units, processors, servers, or the like), human resources utilizing communication devices (e.g., one or more human agents 144 utilizing a computer, telephone, laptop, etc.), or any other resource known to be used in a PSAP environment.

As discussed above, the communication server 124 and resources 132 may or may not be owned and operated by a common entity in a contact center format. In some embodiments, the communication server 124 may be administered by multiple enterprises, each of which has their own dedicated resources 132 connected to the routing engine 128.

In some embodiments, the communication server 124 comprises a communication device movement analysis module 148 which may reside in the communication server 124 or in a number of different servers or processing devices. In some embodiments, cloud-based computing architectures can be employed whereby one or more components of the communication server 124 are available in a cloud or network such that they can be shared among a plurality of different users.

As previously discussed, a Public Safety Access Point (PSAP) 120 may typically be a contact center that answers calls to an emergency telephone number. Examples of services that may be offered by a PSAP 120 via the communication network 116 include communication services, media services, information services, processing services, application services, combinations thereof, and any other automated or computer-implemented services, applications, or telephony features. Trained call-takers, or agents 144, may attempt to address emergencies using their training, procedural guidelines, and experiential knowledge. For example, a Dispatch Guidecard may be utilized such that agents 144 provide an appropriate level of response to an event or emergency. The Dispatch Guidecards may be electronically displayed at a dispatcher workstation 136; moreover, the Dispatch Guidecards may provide prompting to a call-taker or dispatcher such that an agent 144 communicates with the caller in such a way as to receive information regarding the event or emergency from the caller 104.

As previously discussed, the communication server 124 may also comprise a communication device movement analysis module 148 that may work to augment or assist agent 144 when dispatching resources to an emergency event. For example, in some embodiments consistent with the present disclosure, an agent 144 may utilize a PSAP user interface 140; PSAP user interface 140 may reside on the agent workstation 136 and may provide the agent 144 with received movement data that relates to the caller's 104 communication device 112. This movement data may then be displayed on the PSAP user interface 140 to assist an agent when dispatching resources to an event or an emergency, as will be described later.

Resources dispatched to an event or emergency are usually termed first responders. A first responder 160 may be a first person or persons sent out, or dispatched, in an emergency and/or in response to a 9-1-1 call; the first responder 156 may be the first medically trained person who arrives at an event. Typically in the United States and Canada, the first responder 160 may be a firefighter, a police officer, or an emergency medical services (EMS) team/unit. The goal of the first responder 156 may be to provide first aid, stabilization, and/or transport prior to more advanced providers arriving at the event or providing care at a secondary location. Moreover, the first responder 156 dispatched to an emergency or event may be dependent upon the severity of the event, the type of event, and/or may depend on a mechanism of injury. In accordance with some embodiments of the present disclosure, this mechanism of injury may be derived from data provided by one or more inertial sensors 212, such as an accelerometer, provided by a communication device 112 for analysis by a communication device movement analysis module 148.

Communication system 100 may further include a patient information database 152. In some embodiments, the patient information database may reside within the PSAP 120, within the communications server 124, and/or external to the PSAP 120. For example, the patient information database 152 may be in communication with, either directly or indirectly, the communication network 116. The patient information database 152 may include additional information pertaining to one or more callers 104. For example, a history of prior inertial sensor data, prior first responder 156 dispatches, medical information associated with the caller 104, emergency contacts, and the like may be stored and later accessible in the patient information database 152.

The communication device 112 may have additional information associated with it that is useful to the PSAP 120. In addition to inertial sensor information, the information may include the name, number, and location 108 of a caller 104. Location determination typically depends upon information stored and/or maintained in an Automatic Location Information (ALI) database. A service provider database 160 typically allows a PSAP 120 to look up an address that is associated with the caller's telephone number and/or device 112. A wireless connection and/or cellular tower 164 may contain equipment including antennas, Global Positioning System (GPS) receivers, control electronics, digital signal processors (DSPs), transceivers, and backup power sources. The wireless connection and/or cellular tower 164 may be operable to carry and handover telephony and/or data traffic for communication devices 112, within a specified range, for communication with other communication devices 112, PSAP 120, and first responders 156, that may be accessible through the communication network 116.

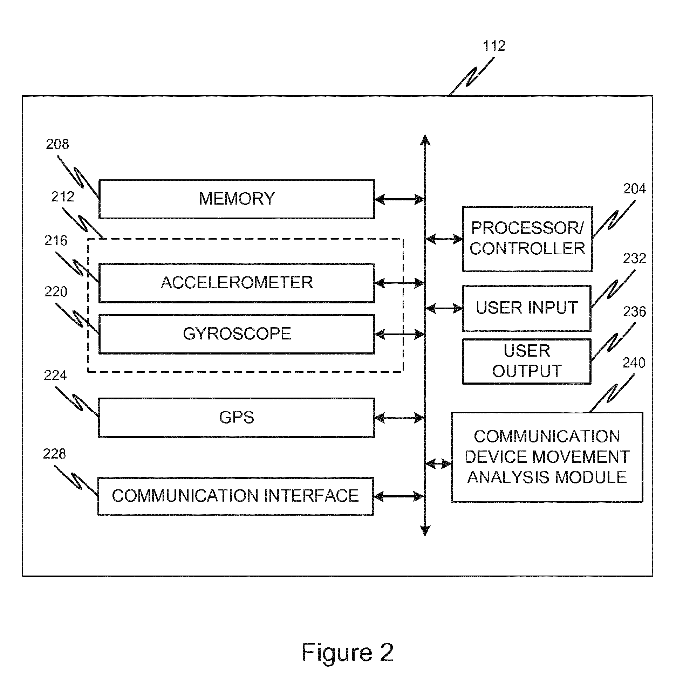

Figure 2 illustrates a block diagram depicting one or more components of a communication device 112. The communication device 112 may include a processor/controller 204 capable of executing program instructions. The processor/controller 204 may include any general purpose programmable processor or controller for executing application programming. Alternatively, or in addition, the processor/controller 204 may comprise an application specific integrated circuit (ASIC). The processor/controller 204 generally functions to execute programming code that implements various functions performed by the communication device 112 in accordance with at least some embodiments of the present disclosure.

The communication device 112 may additionally include memory 208. The memory 208 may be used in connection with the execution of programming instructions by the processor/controller 204, and for the temporary or long term storage of data and/or program instructions. For example, the processor/controller 204, in conjunction with the memory 208 of the communication device 112, may implement emergency services telephony, applications, and web services that are used to access one or more PSAPs 120 and first responders 156.

The memory 208 of the communication device 112 may comprise solid state memory that is resident, removable and/or remote in nature, such as DRAM and SDRAM. Moreover, the memory 208 may comprise a plurality of discrete components of different types and/or a plurality of logical partitions. In accordance with still other embodiments, the memory 208 comprises a non-transitory computer readable storage medium. Such a medium may take many forms, including but not limited to, non-volatile media, volatile media, and transmission media.

The memory 208 of the communication device 112 may further be operable to store data associated with the one or more inertial sensors 212. The inertial sensors may comprise one or more accelerometers 216 and one or more gyroscopes 220. The accelerometer 216 may comprise any device that detects acceleration or deceleration forces, usually in a linear direction along one or more axes. In general, an accelerometer 216 may have the ability to gauge an orientation of communication device 112 relative to the Earth's surface. More precisely, three stationary orthogonal accelerometers can be used to get the obtain the orientation of the communication device 112. For example, most accelerometers 216 include the ability to detect acceleration forces exerted with respect to one or more axes, such as the X-axis, Y-axis, and Z-axis. Thus, the accelerometer 216 may actually comprise one or more individual accelerometers that measure the acceleration forces with respect to each axis. In general, when referring to accelerometer 216 or the data provided by accelerometer 216, the accelerometer 216 is assumed herein to have the capability to provide data or information regarding acceleration forces exerted on at least one of the X-axis, Y-axis, and Z-axis. Thus, the accelerometer 216 can detect an angle at which the communication device 112 is being held, measure movements such as rotation, motion gestures, shaking, and flicking of the communication device 216 by sensing the acceleration forces exerted on each axes. An example of an accelerometer may include, but is not limited to a Microelectromechanical System (MEMS) accelerometer, such as a STMicroelectronics STM331DLH.

As previously mentioned, the inertial sensors 212 may further include one or more gyroscopes 220. A gyroscope generally measures the rate of rotation, or the angular acceleration, around an axis. For example, a three-axis gyroscope may measure the angular acceleration around each of the X-axis, Y-axis, and Z-axis, enabling the precise calculation of yaw, pitch, and roll. An example of a gyroscope may include, but is not limited to a Microelectromechanical System (MEMS) gyroscope, such as the STMicroelectronics L3G4200D. Although the inertial sensor may include other instruments, such as a magnetometer, the inertial sensors 212 may comprise a three-axis accelerometer and a three-axis gyroscope such that the communication device 112 is capable of calculating how far, how fast, and in what direction the communication device 112 has moved in a space. Further, an earpiece 168 may include the inertial sensors 212 such that the earpiece 168 is capable of calculating how far, how fast, and in what direction the earpiece 168 has moved in a space. Additional information regarding the communication device's 112 position may be augmented by a GPS sensor 224.

In addition, user input devices 232 and user output devices 236 may be provided and used in connection with the communication device 112. For example, the user 104 may enter information, or initiate a communication with a PSAP 120 by pressing one or more buttons to call an emergency number, such as 9-1-1, speaking directly into the communication device 112, and or using one or more gestures. Other examples of user input devices 232 include a keyboard, a numeric keypad, a touch screen, a microphone, scanner, and pointing device combined with a screen or other position encoder. Examples of user output devices 236 include a display, a touch screen display, a speaker, and a printer. The communication device 112 also generally includes a communication interface 228 to allow for communication between the communication device 112 and the PSAP 120 to occur. The communication interface 228 may support 3G, 4G, cellular, WiFi, Bluetooth®, NFC, RS232, and RF and the like. In some embodiments, the communication interface may provide one or more means for retrieving inertial measurement data, such as acceleration data, from the communication device 112. For example, a person or first responder 156 may be able to interrogate, access and/or retrieve data from a user's 104 communication device 112 utilizing the communication interface 228.

In some embodiments, the communication device 112 may further include a communication device movement analysis module 240 that may be the same as or similar to the communication device movement analysis module 148. For example, and as will be described further with respect to the communication device movement analysis module 148, the communication device movement analysis module 240 may analyze one or more pieces of inertial sensor data to assess and determine acceleration forces exerted on a caller 104 in one or more positions as indicated by a communication device 112 and/or an earpiece 168; whether a caller 104 is exhibiting one or more signs - such as movement - that are consistent with a abnormal neuromuscular activity; and a position or location of a communication device 112 with respect to and/or relative to a caller 104.

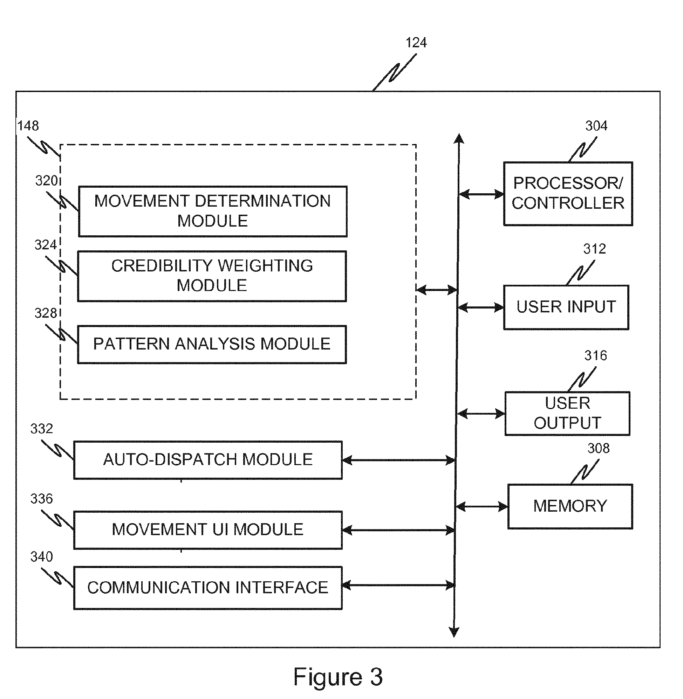

In some embodiments, and as depicted in Figure 3, the communication server 124 may include a processor/controller 304 capable of executing program instructions. The processor/controller 304 may include any general purpose programmable processor or controller for executing application programming. Alternatively, or in addition, the processor/controller 304 may comprise an application specific integrated circuit (ASIC). The processor/controller 304 generally functions to execute programming code that implements various functions performed by the associated server or device. The processor/controller 304 of the communication server 124 may operate to route communications and present information to an agent workstation 136, and optionally to a first responder 160 as described herein.

The communication server 124 may additionally include memory 308. The memory 308 may be used in connection with the execution of programming instructions by the processor/controller 304, and for the temporary or long term storage of data and/or program instructions. For example, the processor/controller 304, in conjunction with the memory 308 of the communication server 124, may implement emergency services telephony, application, and web services that are needed and accessed by one or more communication devices 112, the PSAP 120, and first responders 156.

The memory 308 of the communication server 124 may comprise solid state memory that is resident, removable and/or remote in nature, such as DRAM and SDRAM. Moreover, the memory 308 may comprise a plurality of discrete components of different types and/or a plurality of logical partitions. In accordance with still other embodiments, the memory 308 comprises a non-transitory computer readable storage medium. Such a medium may take many forms, including but not limited to, non-volatile media, volatile media, and transmission media.

The communication server may include a communication device movement analysis module 148 - including a movement determination module 320, a credibility weighting module 324, and a pattern analysis module 328; an auto-dispatch module 332, and a movement UI module 336. Moreover, content from the modules may include information that is rendered by the movement UI module 336 for display on the agent workstation 136.

In addition, user input devices 312 and user output devices 316 may be provided and used in connection with the routing and processing of calls to a PSAP 120 for handling by an agent 144. However, the agent 144 typically interfaces with a PSAP 120 through an agent workstation 136, where the agent workstation 136 each is associated with one or more user inputs and one or more user outputs. Examples of user input devices 312 include a keyboard, a numeric keypad, a touch screen, a microphone, scanner, and pointing device combined with a screen or other position encoder. Examples of user output devices 316 include a display, a touch screen display, a speaker, and a printer. The communication server 124 also generally includes a communication interface 340 to interconnect the communication server 124 to the communication network 116.

The auto-dispatch module 332 may operate to automatically dispatch resources based upon one or more movements associated with the communication device 112 and therefore a caller 104. For example, the movement determination module 320 may provide an indication to the communication server 124 that the detected movement of a caller suggests a specific type of response. In instances where policy allows for automatic dispatch, and/or in situations where an agent 144 is not available to verify or confirm the response to an event or emergency, the auto-dispatch module 332 may cause an appropriate level of response, such as a BLS and ALS first responder 156 to be dispatched. For example, the movement determination module 320 may detect, from accelerometer data received from a caller's 104 communication device 112 that the caller 104 is likely to have suffered a spine or head injury as the result of one or more determined MOIs. Based on this information, the auto-dispatch module may dispatch an appropriate response level, such as a BLS and/or ALS first responder 156. As another example, based on the movement information or inertial sensor information provided by a communication device 112, the movement determination module 320, may detect, or otherwise indicate, that a caller 104 has not moved in a specified period of time, for example 3 minutes. The auto-dispatch module 332 may then dispatch an appropriate level of response based on this information. As yet another example, the movement determination module 320 may detect, from accelerometer data received from a caller's 104 communication device 112 that the accelerations associated with a caller 104 exceed one or more parameters; based on this information, the auto-dispatch module may dispatch an appropriate response level, such as a BLS and/or ALS first responder 156. In some situations, the accelerometer data received may upgrade the call from a No EMS response to a BLS response, for example if the driver informs patrol that he/she wishes to leave the scene after experiencing a substantial impact - as indicated by the accelerometer history. As a further example, the movement determination module 320 may detect, from accelerometer data received from a caller's 104 communication device 112 that the accelerations and/or positions match one or more trends, patterns, or the like generally associated with a seizure or other abnormal neuromuscular activity. Based on this information, the auto-dispatch module may dispatch an appropriate response level, such as BLS and/or ALS first responder 156.

As another example, a caller 104 may be experiencing signs of abnormal neuromuscular activity, such as a seizure. A bystander observing the seizure may place a 9-1-1 call to a PSAP 120 and be instructed to dial 9-1-1 using the caller 104's communication device 112. The caller's 104 communication device may transmit movement information and/or inertial sensor data, such as accelerometer information, to the PSAP 120. The information transmitted to the PSAP may be analyzed to determine a severity and count of the seizure and may further be critical in making the dispatch decision. Additionally, this information could be used in the field and later transmitted to a hospital. Patients with preexisting conditions (such as Parkinsonism) might display symptoms that could be misconstrued as abnormal neuromuscular activity, such as seizures. Thus, the movement determination module may measure the extent or magnitude of a abnormal neuromuscular activity with respect to one or more baselines that may have been stored in and retrieved from a patient database 152. Alternatively, or in addition, the communication device 112 may measure the extent or magnitude of abnormal neuromuscular activity with respect to one or more baselines that may have been stored in and retrieved from a patient database 152. If, for example, a caller 104 exceeds this baseline information, an appropriate level of response may be dispatched by an agent 144 and/or by auto-dispatch module 332.

Alternatively, or in addition, the auto-dispatch module may require that movement exhibited by the communication device be above a threshold, a certain type of movement be detected, a series of one or more movements be detected (for example, a large deceleration indicating a sudden stop of a vehicle followed by little to know movement of communication device 112 and/or earpiece 168), and/or a certain confidence related to each detected movement be above a threshold, prior to automatically dispatching ALS and/or BLS resources, such as one or more first responders 156.

The credibility weighting module 324 may determine one or more weighting factors associated with each movement. For example, in some instances, historical information associated with a caller 104 may reside in the patient information database 152. As a caller 104 initiates contact with a PSAP 120, the communication server 124 may retrieve this information and make this information available to the movement determination module 320, the pattern analysis module 328, and the credibility weighting module 324. Assuming that the movements of a caller 104 (or the communication device 112 associated with caller 104) are similar to the previously detected movements of the caller 104 retrieved from the patient information database 152, the credibility weighting module 324 may associate a higher credibility to one or more of the detected movements currently exhibited by the caller 104. In another example, the credibility weighting module may provide one or more likelihoods, percentages, probabilities, and/or an estimated error determination of a mechanism of injury experienced by the user and an injury associated with an MOI. For instance, based on the available inertial data, and the available trends and/or patterns, the credibility weighting module may determine that there is a 78% chance that a caller 104 has experienced a cervical spine injury based on one or more MOIs. This credibility factor may then be utilized by the movement UI module 324 and/or the auto-dispatch module 332 (as previously mentioned) and may be displayed at a workstation 136.

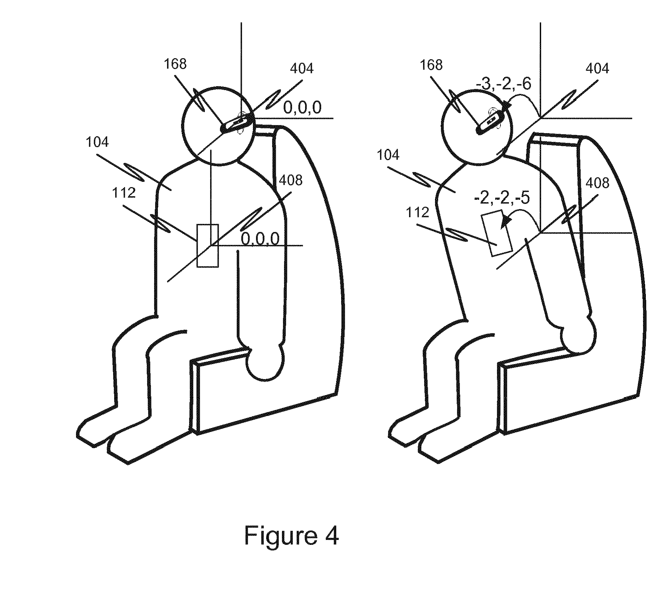

With reference now to Figure 4, a caller 104 may experience an event that causes one or more forces, for example - forces resulting from an automobile crash or otherwise, to act upon or be exerted on the caller 104. This force and the positions of the caller 104 may be recorded throughout the event and further provided to a PSAP 120 for analysis. For instance, inertial sensor data provided by the inertial sensor 212 of communication device 112 may indicate that a caller 104 experiences a negative acceleration of three times the force of gravity (also known as a deceleration of three times the force of gravity for this example) at some point throughout the event. Moreover, with regard to the same or different event, the caller's 104 head may experience a force of -2.5 times the force of gravity, as indicated by a caller's 104 earpiece 168. Additionally, the inertial sensor data may also indicate a position of the communication device 112 and/or earpiece 168; for example, a force acting on a caller 104 at a particular position, and/or orientation, may be discernible from the inertial sensor data. This inertial sensor information may be transmitted to a PSAP 120 and based on this inertial sensor information, an acceleration in one or more directions, a position of a caller 104 and/or a position of their head may be determined at the movement determination module 320. Thus, an acceleration and position of a caller 104 provided by the communication device 112 and/or earpiece 168 may be determined at various instances throughout the event, thereby allowing the complete course of movement of an caller to be determined and thus analyzed. As further shown in Figure 4, a caller's 104 position, according to a communication device 112, may be determined to be -2, -2, -5 relative to an origin 408 after having experienced one or more forces. A position of a caller's 104 head, according to an earpiece 168, may be determine to be -3, -2, -6 relative to an origin 404 after having experienced one or more forces. Thus, different forces acting upon different parts of a caller's 104 body may be determined and tracked. This information may be provided to and/or determined by the communication device movement analysis module 148 and/or the movement determination module 320.

Alternatively, or in addition, the communication device 104 may operate to store inertial sensor data provided by inertial sensors 212 in a memory 208. The mobile device 104 may continuously store this inertial sensor information in a First-In-First-Out (FIFO) buffer such that a specified amount of recent inertial sensor information is available. For example, the communication device 104 may store five minutes of inertial sensor data such that the last five minutes of inertial sensor data is always available. Thus, in the event of an automobile accident, inertial sensor data for a time period prior to the occurrence of the accident, during the occurrence of the accident, and after the occurrence of the accident is available; such information may be transmitted to a PSAP for analysis.

In some embodiments, the communication device 112 may analyze the inertial sensor information to produce acceleration data, rotation data, and/or position data. Thus, an acceleration and position of a caller 104 and/or a caller's 104 earpiece may be stored in memory 208 for later retrieval and/or transmission to a PSAP 120. For example, in some situations, transmitting the data to a PSAP 120 may not be possible; however, a first responder 156 may read the acceleration data, rotation data, and/or position data using another communication device. Stated another way, the first responder 156 may interrogate the communication device 112 to retrieve inertial sensor data. Thus, the first responder 156 may obtain a more complete picture of any movements, forces, and the like experienced by a caller 104 during a particular incident or event.

The position and forces acting upon a caller 104 may further be used to determine possible injuries sustained to the caller 104. For example, based on the inertial sensor data and more specifically, based on the acceleration, and/or deceleration, of a caller's 104 body and/or head throughout an event, an Index of Suspicion for Cervical-Spine Injuries may be determined. Additionally, the position of a body and/or head may also be used to determine an Index of Suspicion for Cervical-Spine Injuries. Alternatively, or in addition, the accelerations, and/or deceleration, of a caller's 104 body and/or head throughout an event may be compared to known patterns, trends, factors and the like to determine a mechanism of injury; based on the determined mechanism of injury, one or more injuries associated with the mechanism of injury may be determined. For instance, a cervical spine injury may result from one or more acceleration forces being exerted on a caller 104's head while a caller's 104 body experiences a different acceleration force. Similarly, based on the inertial sensor data and more specifically, based on the acceleration of a caller's 104 body and/or head and based on the position of a body and/or head throughout an event, a likelihood of internal injuries, such as internal bleeding and closed head injuries may be determined. Alternatively, or in addition, internal injuries commonly associated with one or more mechanism of injury may be determined.

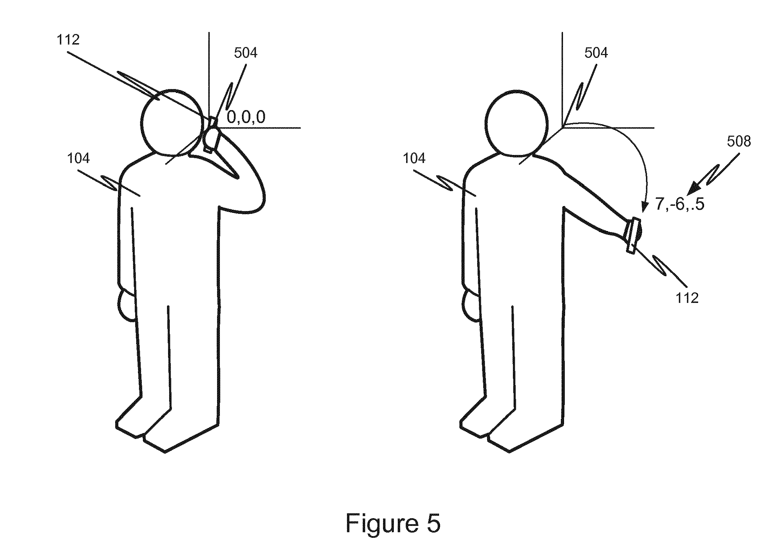

With reference now to Figure 5, inertial sensor information received from a communication device 112 may be analyzed to determine whether the communication device 112 is in a position where the caller 104 is able to hear that which the agent 144 from a PSAP 120 is saying. For example, when a caller 104 is speaking, based on inertial sensor data of the communication device 112, it may be determined by acoustic analysis that the communication device 112 is in close proximity to a specific point on the user's body; for example, the communication device 112 is being held against the caller's 104 head, face, ear, and/or mouth. Alternatively, or in addition, it may be determined by acoustic analysis that the communication device 112 is in close proximity to a specific point on the user's body; for example, the communication device 112 is being held near the caller's 104 head, face, ear, and/or mouth. If this point, e.g. the point at which the communication device 112 is held against or very near to the user 104, is regarded as geometric point 0,0,0, also known as an origin 504, then it may be determined that the caller 104 can hear what may be said through an earpiece of the communication device 112. Inertial sensor data may be provided to the movement determination module 320 such that the movement determination module may determine a position of the communication device 112. Alternatively, or in addition, the communication device 112 may determine this position and provide the determined position to the PSAP 120. The device position may be sent to the movement UI module 336 and eventually displayed at a PSAP user interface 140 of a workstation 136.

During an emergency, an assumption may be made that the caller 104 is no longer able to hear the agent 144 if an analysis of the motion of the communication device 112 reveals Cartesian coordinates that differ considerably from 0,0,0 (an automatic reset to 0,0,0 may be triggered when acoustic analysis indicated the phone is again being held against or near the caller's 104 head). That is, the communication device 112 may be outside of a predetermined range corresponding to an acoustical useful range. For example, and as shown in figure 5, the caller 104 may move the communication device 112 away from his or her head to position 508 (e.g. 7, -6, .5). This movement may coincide with, for example, the caller 104 suddenly loosing strength, passing out, or otherwise. Providing this information, e.g., knowing that the communication device 112 is not being held against or near the caller's 104 ear, may be a useful piece of information for the PSAP 120 (e.g., the agent 144 may assume that what he or she is saying is not being heard by the caller 104). That is, if the communication device 112 is in a position that is not likely to be heard, and there is no response to a verbal query from the caller 104, the agent 144 may reasonably assume that the request was not heard. That is, when the communication device 112 is outside of a predetermined range, the agent 144 may assume that the request was not heard. Such a predetermined range may correspond to or be based on an acoustical useful range. The acoustical useful range may correspond to a distance from the caller in which the communication device 112 may be heard or is likely to be heard. As one example, the acoustical useful range may depend on a volume of a speaker of the communication device 112 and/or a distance between the communication device 112 and the caller. Additionally, in some embodiments, a PSAP 120 may be able to remotely modify a function of the communication device 112 such that the communication device's 112 speakerphone is enabled, the volume is adjusted (i.e. increased), and/or the communication device's 112 speakerphone is disabled (i.e. the communication device is placed in regular handset mode). Such a modification may occur when a position of the communication device is outside a predetermined range. As previously mentioned, the predetermined range may correspond to or be based on an acoustical useful range.

Moreover, an analysis of the inertial sensor data, for example acceleration and position, may reveal that the caller's 104 communication device 112 has not moved within a predetermined period of time. In some instances it may be reasonable to assume that the caller 104 is not responding and therefore a "man down" situation may exist. In some situations, a "man down" event may automatically trigger the dispatch of ALS or BLS resources. Inertial sensor data may be provided to the movement determination module 320 such that the movement determination module may determine a position of the communication device 112.The device position and a "lack of movement" determination may be sent to the movement UI module 336 and eventually displayed at a PSAP user interface 140 of a workstation 136. Alternatively, or in addition, an alert indicating a "man down" event may displayed at a PSAP user interface 140 such that an agent 144 is notified of such an event.

In accordance with some embodiments of the present disclosure, inertial sensor data received from a communication device 112 may be utilized in connection with abnormal neuromuscular activity; that is, the inertial sensor data may be analyzed to reveal an accurate picture of a duration, severity, and count of seizures and other abnormal neuromuscular activity.Abnormal neuromuscular activity may correspond to epileptic and non-epileptic seizures. An epileptic seizure, also known as a "fit", tends to be a transient symptom of abnormal excessive or synchronous neural activity in the brain. In some instances, epileptic seizures may manifest as an alteration in mental state, tonic or clonic movements, and/or convulsions. Non-epileptic seizures tend to be paroxysmal events that generally mimic an epileptic seizure. Unlike an epileptic seizure, non-epileptic seizures do not involve abnormal, rhythmic discharges of cortical neurons and tend to be caused by either physiological or psychological conditions. For example, non-epileptic seizures may include, but are not limited to, tics, chorea, palsy, shivering, involuntary tremor, convulsions, clonic jerks, syncope, and shakiness. In addition, non-epileptic seizures may be caused or be the result of trauma. For example, trauma related injuries may induce seizures.

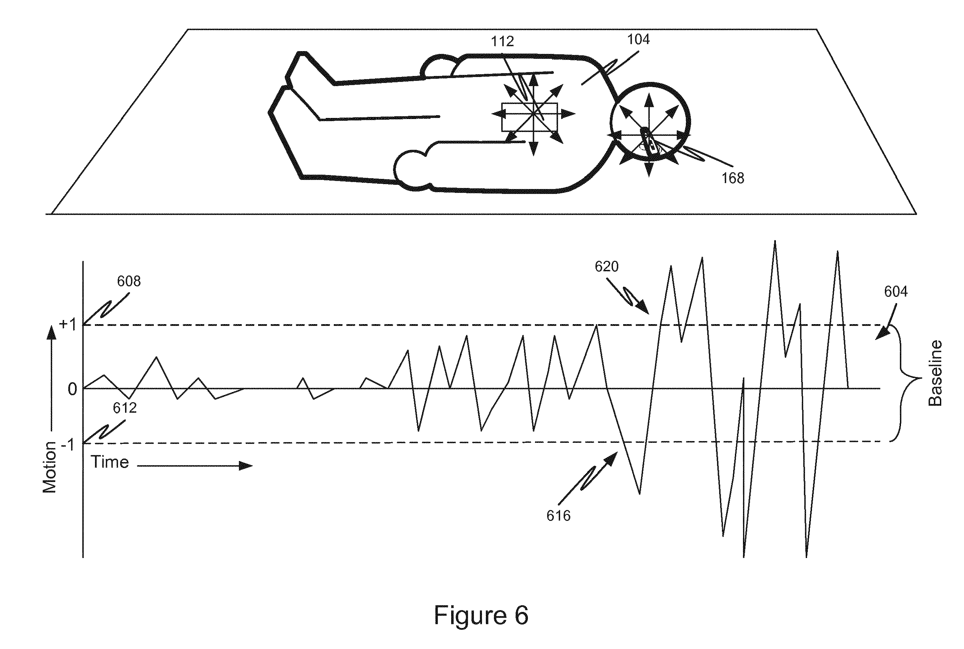

As illustrated in Figure 6, inertial sensor data provided by a communication device 112 and/or an earpiece 168 to a movement determination module 320 may reveal that motions and movements associated with the communication device 112 and/or an earpiece 168 are indicative of abnormal neuromuscular activity, such as a seizure. For instance, the motion and/or movement determined from accelerometer data and associated with the communication device 112 and/or an earpiece 168 may be tracked over time and stored in a memory 208, memory 308, and/or a patient information database 152 as movement and/or motion history information. This history information and/or any current (i.e. most recent) movement or motion information may be retrieved and compared to and correlated with known trends and/or patterns to determine whether a caller 104 is experiencing abnormal neuromuscular activity. Such a comparison may be performed by the pattern analysis module 328. Moreover, a credibility weight, based on the correlation may be determined using the credibility weighting module 324. A result of such a comparison along with a credibility score may then be sent to the movement UI module 336 and eventually displayed at a PSAP user interface 140 of a workstation 136. This information may be critical in making the dispatch decision - for example, ALS or BLS first responders 156, useful to clinicians in the field, and later at the hospital.

In some situations, patients with pre-existing conditions, such as Parkinsonism, might display symptoms that could be misconstrued as abnormal neuromuscular activity, such as seizures; thus, the motion and/or movement exhibited by a caller 104 may be compared with one or more baseline parameters 608, 612. For example, a motion associated with a communication device 112 and/or an earpiece 168 may be utilized such that a threshold amount of motion must occur prior to the movement determination module 320 making a determination as to whether abnormal neuromuscular activity is occurring. As illustrated in Figure 6, baseline parameters may comprise an upper threshold 608 and a lower threshold 612. As movement data 604 is captured and analyzed over time, movement data 604 within the upper threshold 608 and lower threshold 612 may not trigger a abnormal neuromuscular activity determination. However, should the movement data 604 exceed an upper threshold 608 (for example at 620) or a lower threshold 612 (for example at 616), the movement determination module 320 may make a determination that a caller 104 (or patient) is exhibiting signs of abnormal neuromuscular activity, such as a seizure. Additionally, this information, and a determination as to whether the caller 104 is exhibiting abnormal neuromuscular activity, may be sent to the movement UI module 336 for display on a PSAP user interface 140.

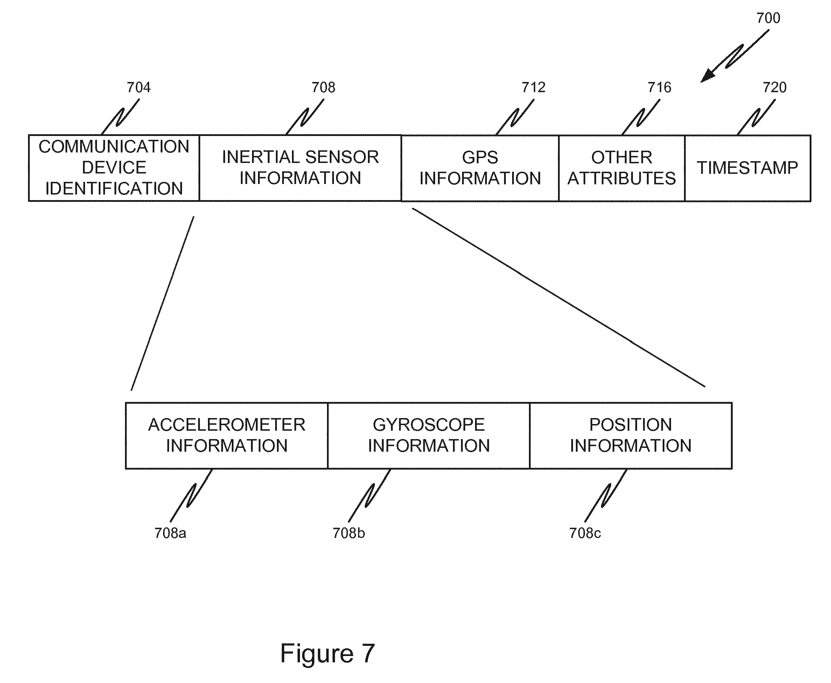

With reference to Figure 7, details of a data structure 700 will be described in accordance with embodiments of the present disclosure. In some embodiments, the data structure 700 can be used to further define attributes and/or metadata about information stored in a communication device 112 and/or transmitted from a communication device, such as device 112, and received at a PSAP 120. The data structure 700 may be partially or completely stored in a FIFO buffer of communication device 112, memory 208, 308, and/or the patient information database 152, or in any other computer memory that is maintaining an instance of information for a caller 104. Examples of fields that may be provided in the data structure 700 include, without limitation, a communication device identification field 704, an inertial sensor information field 708, GPS information field 712, another attribute field 716, and a timestamp field 720.

In some embodiments, the communication device identification field 704 may comprise information that enables a unique identification of the communication device 112 within the PSAP 120 and/or within a communication network 116. For instance, a pseudo-randomly generated communication device identification number may be contained in the communication device identification field 704. Other examples of communication device identification information include, without limitation, a phone number, an IP address, an Electronic Serial Number (ESN), and so on.

The inertial sensor information field 708 may comprise information relating to one or more aspects of movement, position, and/or rate of change regarding a communication device 112. For example, the inertial sensor information field may include, without limitation, an accelerometer information field 708a, a gyroscope information field 708b, and a position information field 708c. Although an accelerometer information field 708a, gyroscope information field 708b, and position information field 708c are illustrated in Figure 7, it should be noted that the inertial sensor information field 708 may include more or less information fields. The accelerometer information field 708a may comprise acceleration information specific to one or more axes of an accelerometer, such as accelerometer 216. The acceleration information field 708a may comprise acceleration data, such as an acceleration and direction, a rate of change in acceleration, and the like. The gyroscope field 708b may comprise gyroscopic information specific to one or more axes of a gyroscope, such as gyroscope 220. The acceleration information field 708b may comprise gyroscope data, such as a rotation around one or more axes, a change in rotation around one or more axes, and the like. Alternatively, or in addition, the communication device 112 may process the accelerometer information and/or the gyroscope information to determine position data; such position data may be included in the position information field 708c.

The GPS information field 712 may comprise information relating to one or more aspects of a communication device's 112 position and/or location. Examples of information that may be maintained in the GPS information field may include, without limitation, latitude and longitude data, address information, range/township information, and the like.

The other attributes information field 716 may comprise information similar to the communication device identification field 704, but the attributes information may not necessarily correspond to information used in connection with the communication device 112. Examples of information that may be maintained in the other attributes information field 716 may include, without limitation, information such as a name of caller 104, an emergency contact for a caller 104 (e.g. In Case of Emergency - ICE), a caller 104 identification that may be used to link or identify caller 104 to/in an information database, such as a medical database containing all or some of caller 104's medical records and a patient information data base 152, and so on.

The timestamp information field 720 may comprise information that specifies a time at which the inertial sensor information in the inertial sensor information field 708 was recorded or obtained. Alternatively, or in addition, the timestamp field 720 may comprise information indicating when data in a data structure 700 was transmitted to a PSAP 120.

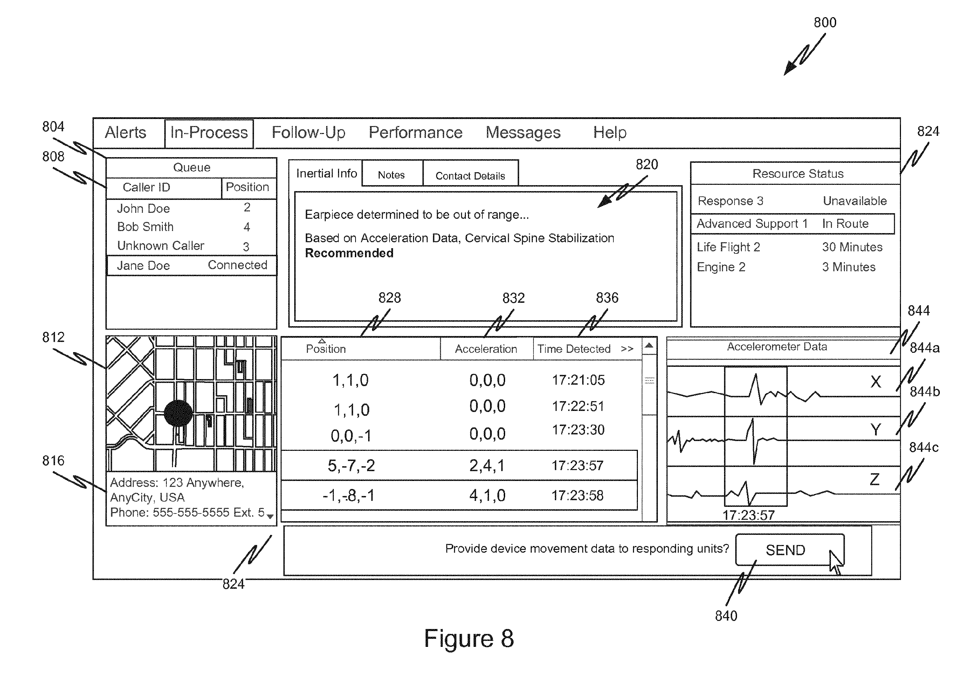

Referring now to Figure 8, in some embodiments, an agent's workstation 136 may include PSAP user interface 140, such as the PSAP user interface 140 depicted in Figure 8. The PSAP user interface 140 may include a queue area 804 that provides an indication to an agent 144 of a queue status 804. Queue status 804 may include the name of the caller and the caller positions 808. The PSAP user interface 140 may also include a location of the currently connected caller. For example, Jane Doe is the currently connected caller; an agent may be provided with a visual map display of Jane Doe's location 812 and Jane Doe's address, 816.

The PSAP user interface 140 may also provide an agent 144 with necessary status information pertaining to one or more first responders 156. For example, the PSAP user interface 140 may provide resource status area 824 indicative of each of the first responder's status, availability, name, call sign, and/or radio ID.

In accordance with some embodiments of the present disclosure, the PSAP user interface 140 may provide inertial data summary illustrating information that may be descriptive of a caller 104. For example, the PSAP user interface 140 may display information associated with a determined position of a communication device 112 and/or an earpiece 168, an acceleration of each access 832, and/or a time in which this information was detected, obtained, and/or received 836. Additionally, the PSAP user interface 140 interface may include an electronic prompt area 820. Electronic prompt area 820 may provide specific guidance to an agent 144; the guidance may be specific to a determined communication device position and/or motions - such as accelerations, rotations, and positions - determined to have been experienced by a caller 104. Alternative, or in addition, the guidance, or prompts, provided by the electronic prompt area 820 may correspond to one or more Dispatch Guidecards and/or be augmented by the accelerations and positions. For example, if the communication device movement analysis module 148 determined that a caller has withstood accelerations of the head and torso that are consistent with one or more cervical spine injuries, the electronic prompt area 820 may recommend cervical spine stabilization, as depicted in Figure 8.

Alternatively, or in addition, the PSAP user interface 140 may further highlight or make obvious to an agent 144 one or more data that are of concern. For example, for a user experiencing one or more acceleration or deceleration forces above a certain threshold, these detected/determined data points may be specifically highlighted as depicted in Figure 8. In some embodiments, an agent 144 may have the option to send the data of specific importance to one or more of the first responder units, such as first responder 156. For example, an agent 144, utilizing a button, such as button 840, may send one or more of the accelerometer data, gyroscope data, position data, abnormal neuromuscular activity data, and/or including the applicable history of the data, to response units and/or one or more healthcare providers, such as a first responder 156. Alternatively, or in addition, the determined information, and/or including the applicable history of the determined information, may be automatically sent to one or more response units and/or one or more healthcare provider, such as a first responder 156. The determined information, such as the acceleration forces at various positions experienced by a caller 104, once transmitted, may provide the response units and/or the healthcare providers with a broader context in which to interpret their own findings. Moreover, the PSAP user interface 140 may automatically synchronize and/or store the information associated with a caller 104 into the patient information database 152.

In accordance with embodiments of the present disclosure, the PSAP user interface 140 may also include one or more inertial data history areas 848 to display historical data associated with a caller 104 to an agent 144. The inertial data history area 848 may include one or more charts 848a, 848b, and 848c, illustratively displaying the detected history of one or more components of inertial data. For example, chart 848a, illustrates the accelerometer data with respect to the X axis; the chart 848b illustrates accelerometer data with respect to the Y axis; and chart 848c illustrates accelerometer data with respect to the Z axis. In other embodiments, gyroscope data and/or positional data may be displayed in the inertial data history area 848. Further, as illustrated in Figure 6, a comparable chart may include one or more baseline parameters or thresholds 608, 612; one or more trend-lines, and one or more high and low indicators such that an agent 144 can quickly obtain information concerning the caller 104. Moreover, the PSAP user interface 140 may display trends, patterns and the like, provided by the communication device movement analysis module 140, to be highlighted such that an agent 144 is quickly alerted to changing clinical signs.

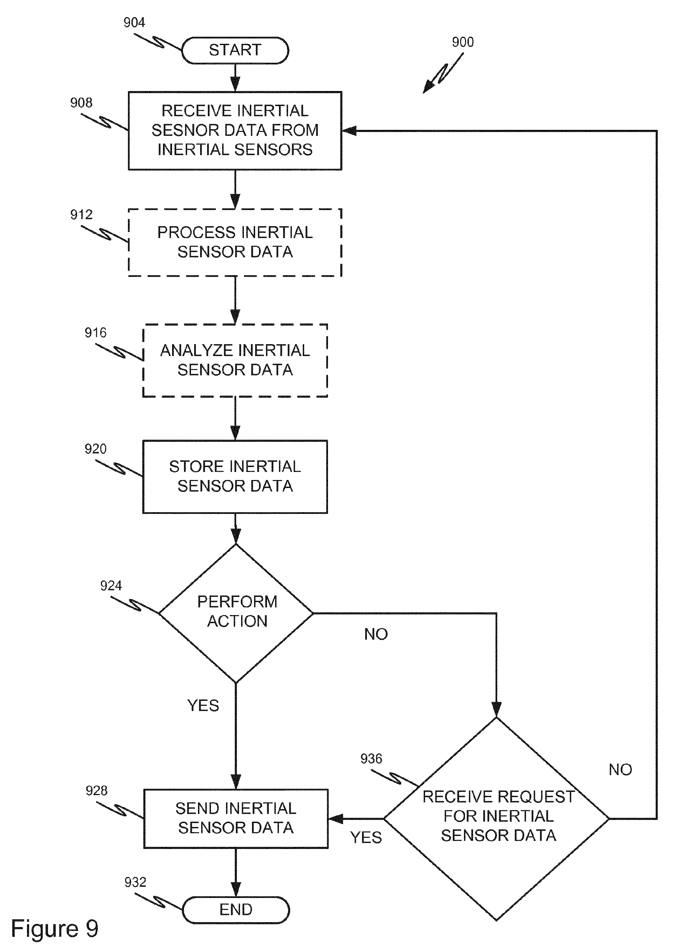

Referring now to Figure 9, a method 900 of receiving and storing inertial data at a communication device 112 will be discussed in accordance with embodiments of the present disclosure. Method 900 is in embodiments, performed by a device, such as a communication device 112. More specifically, one or more hardware and software components may be involved in performing method 900. In one embodiment, one or more of the previously described modules perform one or more of the steps of method 900. The method 900 may be executed as a set of computer-executable instructions executed by a computer system and encoded or stored on a computer-readable medium. Hereinafter, the method 900 shall be explained with reference to systems, components, modules, software, etc. described with Figures 1-8.

Method 900 may continuously flow in a loop, flow according to a timed event, or flow according to a change in an operating or status parameter. Method 900 is initiated at step 904 where a communication device 112 may start one or more data recordation operations. At step 908, a communication device 112 may generate and receive inertial sensor data from one or more inertial sensors, such as those inertial sensors previously described with respect to inertial sensor 212. In an optional step 912, the communication device 112 may process the received inertial sensor data such that the inertial sensor data takes on one or more formats, conveys a summary of one or more forces and/or positions associated with a specific time, and/or is filtered to remove extraneous information.

Method step 908 and/or step 912 then flows to the optional step 916 where the inertial sensor data is analyzed. As previously described, the communication device 112 may, without limitation, analyze one or more pieces of inertial sensor data to assess and determine acceleration forces exerted on a caller 104 in one or more positions as indicated by a communication device 112 and/or an earpiece 168; whether a caller 104 is exhibiting one or more signs - such as movement - that are consistent with a abnormal neuromuscular activity; and a position or location of a communication device 112 with respect to a caller 104. As one example, step 916 may determine that a person is exhibiting signs commonly associated with abnormal neuromuscular activity, such as a seizure. Based on this analysis method 900 may flow to step 920 where the inertial sensor data information is stored, for example in a FIFO buffer or other memory 208, and then to step 924 where an action may or may not be performed. Based on the analysis step 916 and one or more user configurable parameters, if it is determined that a person is exhibiting one or more signs of abnormal neuromuscular activity, such as a seizure, at step 924, method 900 may automatically call a PSAP 120 and send the inertial sensor data to the PSAP 120 in step 928. Method 900 may then end at step 932.

Alternatively, or in addition, method 900 may proceed to step 936 after storing the inertial sensor data in step 920. At step 936, method 900 determines whether a request for inertial sensor data has been made. For example, in instances where a caller 104 initiates a communication with a PSAP 120, the PSAP 120 may request stored as well as currently captured inertial sensor data from a caller's 104 communication device 112. If this request is received, and possibly authenticated, method 900 may then flow to step 928, where the initial sensor data requested may be sent to a PSAP 120. Method 900 then ends at step 932.

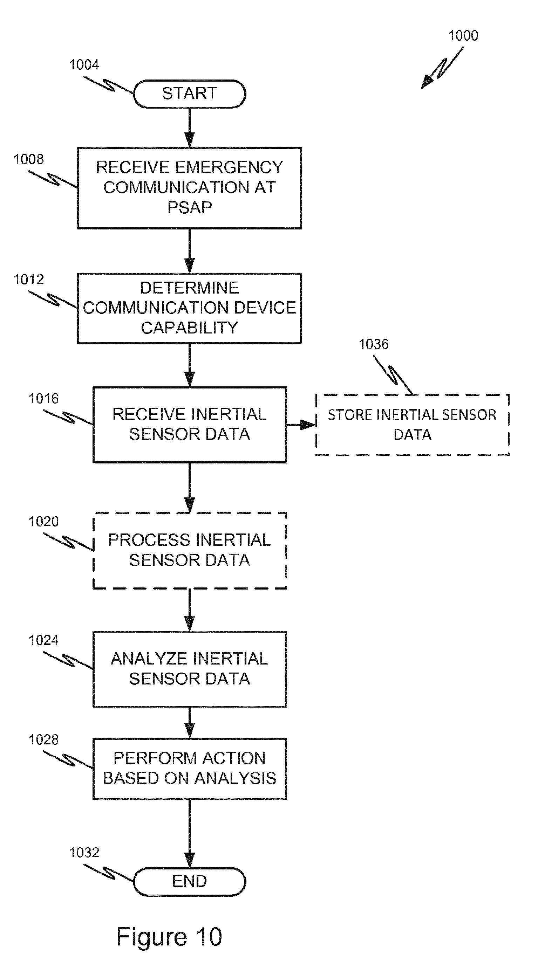

Referring now to Figure 10, a method 1000 of receiving and storing inertial data at a PSAP 120 will be discussed in accordance with embodiments of the present disclosure. Method 1000 is in embodiments, performed by a device, such as a communication server 124. More specifically, one or more hardware and software components may be involved in performing method 1000. In one embodiment, one or more of the previously described modules perform one or more of the steps of method 1000. The method 1000 may be executed as a set of computer-executable instructions executed by a computer system and encoded or stored on a computer-readable medium. Hereinafter, the method 1000 shall be explained with reference to systems, components, modules, software, etc. described with Figures 1-9.

Method 1000 may continuously flow in a loop, flow according to a timed event, or flow according to a change in an operating or status parameter. Method 1000 is initiated at step 1004 where a communication device 112 may initiate a communication with a PSAP 102. The communication server 124 of the PSAP 120 may then receive the emergency communication in step 1008. Method 1000 then flows to step 1012 where the communication server 124 determines the communication device's 112 capability. For example, if a communication device is not capable of providing the PSAP 120 with data regarding inertial sensor data, the communication server 124 may determine that the call should be routed, via routing engine 128, directly to an agent 144. If, on the other hand, the communication device is capable of providing a PSAP 120 with inertial sensor data, such as in the case of communication device 112, then method 1000 may request inertial sensor data and flow to step 1016, where the inertial sensor data is received at the communication server 124. Alternatively, or in addition, the communication device 112 may transmit inertial sensor data to the communication server 124 upon initiating a communication with the PSAP 120. After receiving one or more pieces of inertial sensor data, method 1016 may optionally store the inertial sensor data in step 1036. The inertial sensor data may be stored in a memory 308 and/or a patient information database 152.

Method 1000 may then flow to optional step 1020 where the inertial sensor data is processed; the inertial sensor data may be processed such that the inertial sensor data takes on one or more formats, conveys a summary of one or more forces and/or positions associated with a specific time, and/or is filtered to remove extraneous information. After the inertial sensor data is received and/or optionally processed, the method 1000 then flows to step 1024 where the inertial sensor data is analyzed. As previously described, the communication device movement analysis module 148 may, without limitation, analyze one or more pieces of inertial sensor data to assess and determine acceleration forces exerted on a caller 104 in one or more positions as indicated by a communication device 112 and/or an earpiece 168; whether a caller 104 is exhibiting one or more signs - such as movement - that are consistent with a abnormal neuromuscular activity; and a position or location of a communication device 112 with respect to a caller 104. As one example, step 1024 may determine that a person is exhibiting signs commonly associated with a abnormal neuromuscular activity, such as a seizure. Based on this analysis method 1000 may flow to step 1028 where an action may be performed. Alternatively, or in addition, at step 1024, method 1000 may determine a position of a caller's 104 communication device 112. In some embodiments, step 1024 of method 1000 may determine whether cervical spine stabilization is requires - as previously described.

Method 1000 then flows to step 1028 where an action based on the analysis is performed. For example, if the movement determination module 320, may determine that cervical spine stabilization is recommended and inform the movement UI module 336 such that the indication may be rendered on the PSAP user interface 140. As another example, the movement determination module 320 may determine that a caller 104 is exhibiting movements commonly associated with a abnormal neuromuscular activity; thus at step 1028, the Auto-Dispatch Module 332 may automatically dispatch resources 156 pertaining to an appropriate level of response. Method 1000 may then end at step 1032.

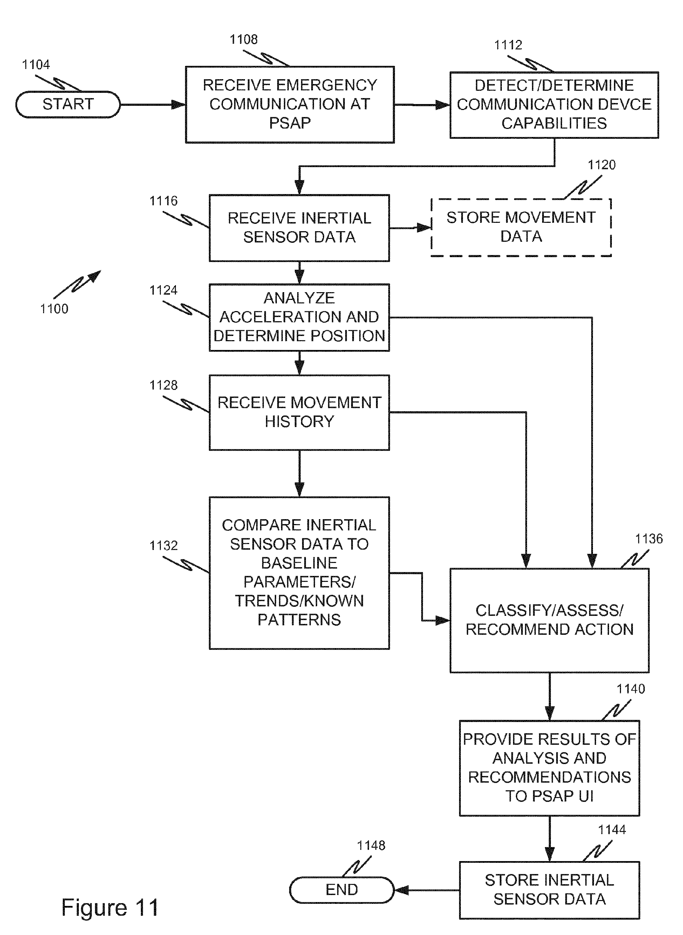

Referring now to Figure 11, a method 1100 of receiving and storing inertial data at a PSAP 120 will be discussed in accordance with embodiments of the present disclosure. Method 1100 is in embodiments, performed by a device, such as a communication server 124. More specifically, one or more hardware and software components may be involved in performing method 1100. In one embodiment, one or more of the previously described modules perform one or more of the steps of method 1100. The method 1100 may be executed as a set of computer-executable instructions executed by a computer system and encoded or stored on a computer-readable medium. Hereinafter, the method 1100 shall be explained with reference to systems, components, modules, software, etc. described with Figures 1-10.

Method 1100 may continuously flow in a loop, flow according to a timed event, or flow according to a change in an operating or status parameter. Method 1100 is initiated at step 1104 where a communication device 112 may initiate a communication with a PSAP 102. The communication server 124 of the PSAP 120 may then receive the emergency communication in step 1108. Method 1100 then flows to step 1112 where the communication server 124 detects and/or determines the communication device's 112 capability. For example, if a communication device is not capable of providing the PSAP 120 with data regarding inertial sensor data, the communication server 124 may determine that the call should be routed, via routing engine 128, directly to an agent 144. If, on the other hand, the communication device is capable of providing a PSAP 120 with inertial sensor data, such as in the case of communication device 112, then method 1100 may request inertial sensor data and flow to step 1116, where the inertial sensor data is received at the communication server 124. Alternatively, or in addition, the communication device 112 may transmit inertial sensor data to the communication server 124 upon initiating a communication with the PSAP 120. After receiving one or more pieces of inertial sensor data, method 1116 may optionally store the inertial sensor data in step 1120. The inertial sensor data may be stored in a memory 308 and/or a patient information database 152 for example.

At step 1124, and as described previously, the communication device movement analysis module 148 may, without limitation, analyze one or more pieces of inertial sensor data to assess and determine acceleration forces exerted on a caller 104 in one or more positions as indicated by a communication device 112 and/or an earpiece 168; whether a caller 104 is exhibiting one or more signs - such as movement - that are consistent with a abnormal neuromuscular activity, such as a seizure; and a position or location of a communication device 112 with respect to a caller 104. As one example, and as depicted in step 1124, acceleration data is analyzed to determine a position; that is, based on the acceleration of a communication device 112 and/or an earpiece 168, a position of the communication device 112 and/or an earpiece 168 is determined. The acceleration and position is then provided to step 1136.

After the acceleration has been analyzed and a position has been determined at step 1124, a movement history may be obtained at step 1128. A movement history may correspond to previous data provided by a communication device 112 and/or an earpiece 168 and retrieved from a patient information database 152 for example. Such information may comprise previous abnormal neuromuscular activity data from a caller's 104 communication device 112 and may include seizure data. Alternatively, or in addition, the movement history may comprise previous abnormal neuromuscular activity and/or seizure data corresponding to various baseline parameters; trends, and/or known patterns that generally are indicative of seizure movement. As one example, the movement history received at step 1128 may comprises one or more upper baseline parameters/thresholds 608 and one or more lower baseline parameters/thresholds 612.

As another example, the movement data received at step 1128 may comprise various patterns of data - such as one or more forces exerted on a body at various positions over time and corresponding to a communication device and/or earpiece; thus, at step 1132, the movement history data may be compared to inertial sensor data as one method of determining a likely injury sustained by caller 104. For example, based on an acceleration and/or a pattern of accelerations, at step 1136, the movement determination module 320 and the pattern analysis module 328 may determine that the acceleration and pattern of accelerations experience by a caller 104 would most likely require the stabilization of the caller's 104 cervical spine. Alternatively, or in addition, the credibility weighting module 324 may also provide a score or a weight as to the likelihood of a caller 104 requiring cervical spine stabilization. Such classification, assessment, and/or recommendation may then be provided to the movement UI module 336 at step 1140 such that the PSAP user interface 140 can be updated to provide an agent 144 with the necessary classification/assessment/recommendation - for example, in electronic prompt area 820. As another example, the movement history data may be compared to inertial sensor data to determine a mechanism of injury experienced by the caller 104 and an injury associated with the mechanism of injury. For instances, based on an acceleration and/or a pattern of accelerations, at step 1136, the movement determination module 320 and the pattern analysis module 328 may determine that the acceleration and pattern of accelerations experience by a caller 104 would most likely indicate at least one mechanism of injury; an injury commonly associated with the at least one mechanism of injury may then be determined. At step 1144, the inertial sensor data may be stored to a patient information database 152 and/or memory 308 for later use in assessing a caller's 104 condition and the method may end at step 1148.

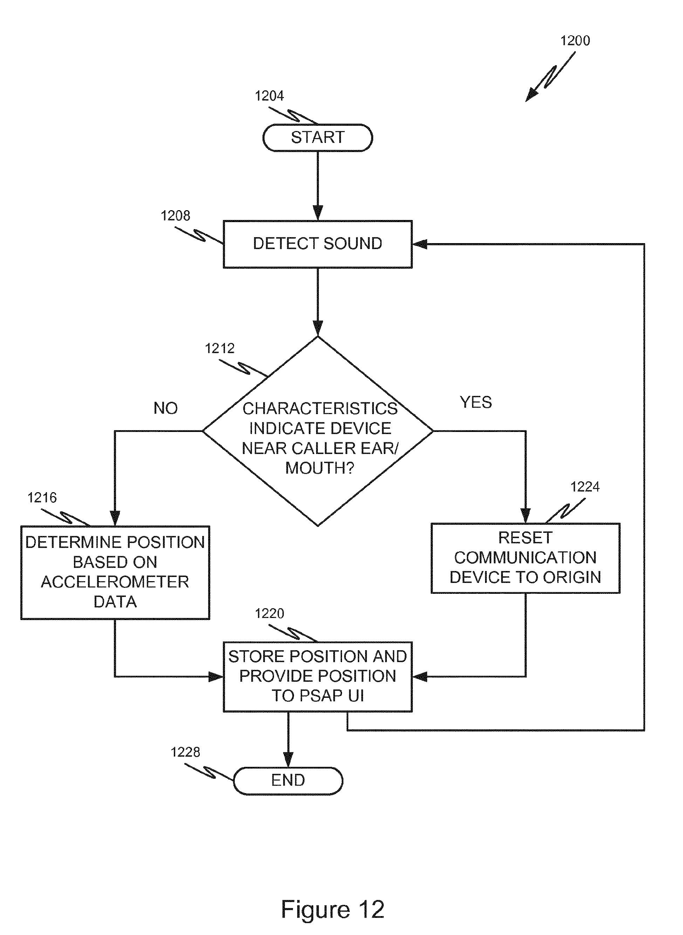

Referring now to Figure 12, a method 1200 of determining a position of a communication device 112 in relation to caller 104 will be discussed in accordance with embodiments of the present disclosure. Method 1200 is in embodiments, performed by a device, such as a communication server 124 and/or a communication device 112. More specifically, one or more hardware and software components may be involved in performing method 1200. In one embodiment, one or more of the previously described modules perform one or more of the steps of method 1200. The method 1200 may be executed as a set of computer-executable instructions executed by a computer system and encoded or stored on a computer-readable medium. Hereinafter, the method 1200 shall be explained with reference to systems, components, modules, software, etc. described with Figures 1-11.

Method 1200 may continuously flow in a loop, flow according to a timed event, or flow according to a change in an operating or status parameter. Method 1200 is initiated at step 1204 where a communication device 112 and/or a movement determination module 320 of a communication server 124 initiate a communication a process to determine a location of a mobile device 112 with respect to a caller 104. As previously described with respect to Figure 5, determining a location of a communication device 112 with respect to a caller 104 may be beneficial in determining whether or not a caller 104 can hear what an agent 144 is saying. If the communication device 112 is away from a caller's 104 ear, the caller 104 is unlikely to hear what the agent 144 is saying; thus, the position of the communication device 112 with respect to a caller 104 may be determined and tracked throughout a communication.

At step 1208, sound such as a voice or audio originating from caller 104 is detected. Such detected sound may be acoustically analyzed to determine if the sound originated from the caller's 104 mouth or is otherwise background sound. Moreover, the strength and clarity of the sound, for example the caller's 104 voice, may be used to determine whether or not the sound characteristics indicate that the communication device 112 is near the user's mouth and/or the user's ear at step 1212. For example, an accelerometer 216, gyroscope 220, and/or a determined position may indicate that the communication device is oriented in a manner such that the earpiece of the communication device 112 is in a normal upright, or frequently used position. In such an instance, if the caller's 104 voice is strong and clear, the audio characteristics along with the orientation of the communication device 112 may indicate that the communication device 112 is the caller's 104 ear/mouth. If it is determined that the communication device 112 is near a caller's 104 ear/mouth 2, then the communication device 112 is determined to be at an origin, such as origin 504. Thus, at step 1224, the position of a communication device 112 is reset to the origin, such as origin 504.

If, on the other hand, the voice is not strong or is absent, the clarity of a caller's 104 voice is not very clear or is absent, and/or the orientation of the communication device indicates the communication device 112 is in an orientation unlikely to be heard (for example, upside-down), the accelerations over time provided by the accelerometer 216 may be utilized to determine a position of the communication device 112. Either position, that is the position determined at step 1216 and/or the position determined at step 1124 may then be stored in a memory, such as memory 208, and provided to a PSAP 120. The method 1200 may then end at step 1228 and/or the repeat at step 1208 where sound again is detected.

In the foregoing description, for the purposes of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor (GPU or CPU) or logic circuits programmed with the instructions to perform the methods (FPGA). These machine-executable instructions may be stored on one or more machine readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

Specific details were given in the description to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments were described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

While illustrative embodiments of the disclosure have been described in detail herein, it is to be understood that the inventive concepts may be otherwise variously embodied and employed, and that the appended claims are intended to be construed to include such variations, except as limited by the prior art.

## Claims

1. A method comprising:
receiving, at a communication server of a Public Safety Answering Point (PSAP), inertial sensor data from one or more inertial sensors associated with a communication device;
providing the inertial sensor data to a movement analysis module;
analyzing, using at least the movement analysis module, the inertial sensor data to obtain movement information for the communication device;
based on the obtained movement information, determining one or more of: (i) a movement of the communication device with respect to an origin point of the communication device; (ii) a mechanism of injury experienced by a user associated with the communication device and an injury associated with the mechanism of injury; and (iii) whether the movement information corresponds to abnormal neuromuscular activity experienced by the user; and
providing the movement information and the determination at least to a computer associated with the PSAP.

2. The method of claim 1, further comprising:
utilizing accelerometer data to determine a position of the communication device with respect to the origin point of the communication device; and
modifying a function of the communication device when the position of the communication device is outside a predetermined range, wherein the predetermined range is based on an acoustical useful range.

3. The method of claim 1, further comprising:
performing an acoustical analysis to determine if the communication device is in close proximity to a specific point on the user's body; and
calibrating the origin point of the communication device based on the acoustical analysis.

4. The method of claim 1, wherein modifying a function of the communication device comprises at least one of: (i) adjusting a volume of the communication device; (ii) placing the communication device in a speakerphone mode; and (ii) placing the communication device in a regular handset mode.

5. The method of claim 1, further comprising:
analyzing the movement information for one or more indicators of abnormal neuromuscular activity;
receiving abnormal neuromuscular activity movement information, the abnormal neuromuscular activity movement information including one or more parameters corresponding toabnormal neuromuscular activity; and
comparing the one or more indicators of abnormal neuromuscular activity to the one or more parameters corresponding to abnormal neuromuscular activity to determine if the user is experiencingabnormal neuromuscular activity.

6. The method of claim 1, further comprising:
analyzing the movement information to determine one or more forces exerted on the user;
receiving known movement information, the known movement information including one or more parameters corresponding to a mechanism of injury and an injury associated with the mechanism of injury; and
comparing the determined one or more forces exerted on the user to the one or more parameters corresponding to a mechanism of injury to determine a mechanism of injury and an injury associated with the mechanism of injury for the user.

7. The method of claim 1, further comprising:
providing a recommendation for dispatching resources based on one or more of: (i) the movement of the communication device with respect to the specific point on the user's body; (ii) a mechanism of injury experienced by the user associated with the communication device and an injury associated with the mechanism of injury; and (iii) whether the movement information corresponds to abnormal neuromuscular activity experienced by the user.

8. The method of claim 1, wherein at least one inertial sensor is located at an earpiece external to the communication device, the earpiece being in communication with the communication device.

9. The method of claim 1, further comprising:
receiving one or more of: (i) historical inertial sensor data, (ii) historical movement information associated with the communication device, and (iii) medical records associated with the user; and
determining, based on the one or more of received (i) historical inertial sensor data, (ii) historical movement information associated with the communication device, and (iii) medical records associated with the user, at least one of: (i) a movement of a communication device with respect to a specific point on the user's body; (ii) a mechanism of injury experienced by a user associated with the communication device and an injury associated with the mechanism of injury; and (iii) whether the movement information correspond to abnormal neuromuscular activity experienced by the user.

10. A computer readable information storage medium comprising processor executable instructions operable to perform the method of claim 1.

11. A system that assists in a decision-making process at a Public Safety Answering Point (PSAP) to dispatch resources based on movement information associated with a communication device of a user, comprising:
a communication server including a movement analysis module configured to receive inertial sensor data from an inertial sensor associated with the communication device, analyze the inertial sensor data to obtain movement information for the communication device, determine one or more of: (i) a movement of the communication device relative to an origin point of the communication device; (ii) a mechanism of injury experienced by a user associated with the communication device and an injury associated with the mechanism of injury; and (iii) whether the movement information corresponds to abnormal neuromuscular activity experienced by the user; and provide the movement information and the determination at least to a computer associated with the PSAP.

12. The system of claim 11, wherein the inertial sensor data received from an inertial sensor associated with a communication device is received at a PSAP over a communication network.

13. The system of claim 11, further comprising one or more modules configured to:
utilize accelerometer data to determine a position of the communication device with respect to the origin point of the communication device; and
modify a function of the communication device when the position of the communication device is outside a predetermined range.

14. The system of claim 11, further comprising one or more modules configured to:
perform an acoustical analysis to determine if the communication device is in close proximity to a specific point on the user's body; and
calibrate the origin point of the communication device based on the acoustical analysis.

15. The system of claim 11, further comprising one or more modules configured to:
analyze the movement information for one or more indicators of abnormal neuromuscular activity;
receive abnormal neuromuscular activity movement information, the abnormal neuromuscular activity movement information including one or more parameters corresponding to abnormal neuromuscular activity;
compare the one or more indicators of a abnormal neuromuscular activity to the one or more parameters corresponding to abnormal neuromuscular activity to determine if the user is experiencing abnormal neuromuscular activity;
analyze the movement information to determine one or more forces exerted on the user;
receive known movement information, the known movement information including one or more parameters corresponding to a mechanism of injury and an injury associated with the mechanism of injury; and
compare the determined one or more forces exerted on the user to the one or more parameters corresponding to a mechanism of injury to determine a mechanism of injury and an injury associated with the mechanism of injury for the user.
